# EUROPEAN PATENT APPLICATION

(11) **EP 4 803 810 A1**
(43) Date of publication of application: **09.09.2026**
(21) Application number: 26151929.2
(22) Date of filing: 14.01.2026
(51) Int. Cl.: F24C 15/02

(54) **COOKING DEVICE**

(30) Priority: 05.03.2025 CN 202520376882 U
(71) Applicant: Shenzhen Typhur Technology Co., Ltd, Shenzhen, Guangdong 518067 (CN)
(72) Inventor: CHEN, Zuxiang, Shenzhen, Guangdong 518067 (CN); ZHANG, Hong, Shenzhen, Guangdong 518067 (CN); WEI, Xiang, Shenzhen, Guangdong 518067 (CN); CHEN, Xuchao, Shenzhen, Guangdong 518067 (CN); MA, XiaoKang, Shenzhen, Guangdong 518067 (CN)
(74) Representative: KIPA AB

(57) **Abstract**

The cooking device comprises a cooking box, a storage box, and a temperature measuring probe. The cooking box comprises a box body, a cooking cavity opening and closing member, and a handle defined on the cooking cavity opening and closing member. The handle is configured to operate the opening and closing of the cooking cavity opening and closing member. The box body and the cooking cavity opening and closing member enclose a cooking cavity for cooking food. The temperature measuring probe is detachably mounted in the storage box to be removable for temperature measurement. After use, the temperature measuring probe can be re-stored on the handle, improving the problem of inconvenient storage existing in current cooking devices when using the temperature measuring probe to detect food temperature.

## Description

### Technical Field

The present application relates to the technical field of food processing equipment, and specifically to a cooking device.

### Background Art

Current cooking devices such as electric ovens and air fryers typically detect the temperature in the cooking cavity using built-in temperature sensors. However, the temperature detected by the temperature sensor is the air temperature in the oven cavity or the temperature of internal components, which differs from the internal temperature of the cooked food, thereby resulting in poor cooking effects. To accurately obtain the temperature of the cooked food, some current cooking devices are equipped with temperature measuring probes to detect the food temperature. After use, the temperature measuring probe is removed from the cooking cavity and placed arbitrarily, which is inconvenient for storage and prone to loss.

### Summary

The present application provides a cooking device to improve the problem of inconvenient storage existing in current cooking devices when using a temperature measuring probe to detect food temperature.

In a first aspect, an embodiment provides a cooking device, comprising:
a cooking box, the cooking box comprising a box body, a cooking cavity opening and closing member, and a handle defined on the cooking cavity opening and closing member, the box body and the cooking cavity opening and closing member enclosing a cooking cavity for cooking food; the handle being configured to operate the opening and closing of the cooking cavity opening and closing member;
a storage box, the storage box being detachably mounted on the handle; and
a temperature measuring probe, the temperature measuring probe being detachably mounted in the storage box to be removable for temperature measurement.

Further, in an embodiment, the handle has a mounting groove, the storage box is detachably mounted in the mounting groove, and an outer surface of the storage box transitions smoothly with an outer surface of the handle.

Further, in an embodiment, the handle has a mounting groove, the storage box is detachably mounted in the mounting groove, the handle comprises a groove cover, the groove cover is openably covering a groove opening of the mounting groove, the groove cover being capable of covering the storage box when closed and allowing the storage box to be removed when open.

Further, in an embodiment, the temperature measuring probe is a wireless probe, the cooking device comprises a charging module, the charging module is defined in the handle, the temperature measuring probe comprises a probe charging member and a probe battery; the charging module is configured to electrically connect with the probe charging member after the temperature measuring probe is loaded into the storage box and the storage box is mounted on the handle, to charge the temperature measuring probe.

Further, in an embodiment, the charging module comprises a charging contact member; the charging contact member is configured to make conductive contact with the probe charging member to achieve electrical connection between the charging module and the probe charging member.

Further, in an embodiment, the storage box has a box opening for inserting and removing the temperature measuring probe, after the storage box is mounted on the handle, the box opening faces the handle, and the charging contact member extends into the storage box through the box opening to make conductive electrical contact with the probe charging member.

Further, in an embodiment, the cooking device comprises a charging module, the charging module is defined in the storage box, the temperature measuring probe comprises a probe charging member and a probe battery electrically connected to the probe charging member, the charging module is configured to conductively connect with the probe charging member so that the charging module can charge the probe battery; the storage box has a charging interface, the charging interface is electrically connected to the charging module, the box body has a power supply interface for conducting with a power source, and the charging interface is configured to conduct with the power supply interface via an external charging cable.

In an embodiment, the present application also provides a cooking device, comprising:
a cooking box, the cooking box comprising a box body, a cooking cavity opening and closing member, and a handle defined on the cooking cavity opening and closing member, the box body and the cooking cavity opening and closing member enclosing a cooking cavity for cooking food; the handle being configured to operate the opening and closing of the cooking cavity opening and closing member; and
a temperature measuring probe, the handle comprising a storage connection structure, the temperature measuring probe being detachably connected to the storage connection structure so that the temperature measuring probe can be removed for temperature measurement; in a state where the temperature measuring probe is stored in the storage connection structure, a temperature measuring end of the temperature measuring probe is located outside the cooking cavity.

Further, in an embodiment, the storage connection structure has a storage groove, and the temperature measuring probe is detachably mounted in the storage groove.

Further, in an embodiment, the temperature measuring probe is a wireless probe, the cooking box comprises a control module for controlling the temperature in the cooking box, and the control module is wirelessly communicatively connected to the temperature measuring probe to receive measurement data from the temperature measuring probe.

According to the cooking device of the above embodiments, since the temperature measuring probe of the cooking device can be mounted on the storage connection structure of the handle or in the storage box mounted on the handle, and can be removed from the handle, after removing the temperature measuring probe, the temperature of the cooked food can be measured to accurately obtain the food temperature. After use, the temperature measuring probe can be re-stored on the handle, improving the problem of inconvenient storage existing in current cooking devices when using the temperature measuring probe to detect food temperature.

### Brief Description of the Drawings

FIG. 1 is a front view of a cooking device in an embodiment;
FIG. 2 is a cross-sectional view along A-A in FIG. 1;
FIG. 3 is an enlarged view of portion A in FIG. 2;
FIG. 4 is a structural schematic diagram of a temperature measuring probe and a storage box in an embodiment;
FIG. 5 is a cross-sectional view of a temperature measuring probe and a storage box in an embodiment;
FIG. 6 is another cross-sectional view of a temperature measuring probe and a storage box in an embodiment;
FIG. 7 is a top view of another cooking device in an embodiment.

Reference numerals in the drawings: 1, cooking box; 11, cooking cavity; 12, box body; 121, power supply interface; 13, cooking cavity opening and closing member; 14, handle; 141, mounting groove; 15, handle magnetic member; 2, storage box; 21, box opening; 22, probe removal notch; 23, storage box groove; 24, storage box magnetic member; 25, first box body; 26, second box body; 261, through hole; 27, snap; 28, charging interface; 3, temperature measuring probe; 31, probe charging member; 311, probe positive electrode; 312, probe negative electrode; 32, needle; 4, charging module; 41, charging contact member; 42, circuit board; 5, control panel.

Explanation regarding reference numerals in parentheses in the drawings: In the drawings, the feature indicated by a reference numeral in parentheses is both the feature represented by the number inside the parentheses and the feature represented by the number outside the parentheses.

### Detailed Description

The present application will be further described in detail below through specific embodiments in conjunction with the accompanying drawings. Similar elements in different embodiments are denoted by associated similar element numerals. In the following embodiments, many details are described to enable a better understanding of the present application. However, those skilled in the art can readily recognize that some features may be omitted in different situations or may be replaced by other elements, materials, or methods. In some cases, certain operations related to the present application are not shown or described in the specification to avoid overwhelming the core part of the present application with excessive description. For those skilled in the art, a detailed description of these related operations is not necessary, as they can fully understand the related operations based on the description in the specification and general technical knowledge in the field.

In addition, the features, operations, or characteristics described in the specification may be combined in any appropriate manner to form various embodiments. Meanwhile, the steps or actions in the method description may also be sequentially exchanged or adjusted in a manner apparent to those skilled in the art. Therefore, the various sequences in the specification and drawings are merely for clearly describing a certain embodiment and do not imply a required sequence unless otherwise specified that a certain sequence must be followed.

In the description herein, it should be understood that terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on those shown in the drawings, merely for convenience in describing the present application and simplifying the description, rather than indicating or implying that the referred device or element must have a specific orientation, be constructed and operated in a specific orientation, and thus should not be construed as limiting the present application.

Furthermore, the terms "first" and "second" are used for descriptive purposes only and should not be understood as indicating or implying relative importance or implicitly indicating the number of technical features indicated. Thus, a feature defined as "first" or "second" may explicitly or implicitly include one or more of such features. In the description of the present application, "plurality" means two or more, unless otherwise expressly and specifically defined.

In the present application, unless otherwise expressly specified and defined, a first feature being "on" or "under" a second feature may mean direct contact between the first and second features, or indirect contact between the first and second features through an intermediate medium. Moreover, a first feature being "above," "over," or "on top of" a second feature may mean the first feature is directly above or obliquely above the second feature, or simply that the first feature is at a higher horizontal level than the second feature. A first feature being "below," "under," or "beneath" a second feature may mean the first feature is directly below or obliquely below the second feature, or simply that the first feature is at a lower horizontal level than the second feature.

The embodiments described in the detailed description, if not conflicting, may be combined in any suitable manner, for example, combinations of different embodiments may form different implementations. To avoid unnecessary repetition, various possible combinations of the embodiments are not described separately.

In view of the problem in current cooking devices where the temperature measuring probe is placed arbitrarily after temperature measurement, leading to inconvenient storage, the present application provides a cooking device capable of storing the temperature measuring probe. The cooking device can store the temperature measuring probe on the handle of the cooking box, which facilitates storage without affecting the normal use of the cooking box. The cooking device of the present application is described in detail below in conjunction with the drawings.

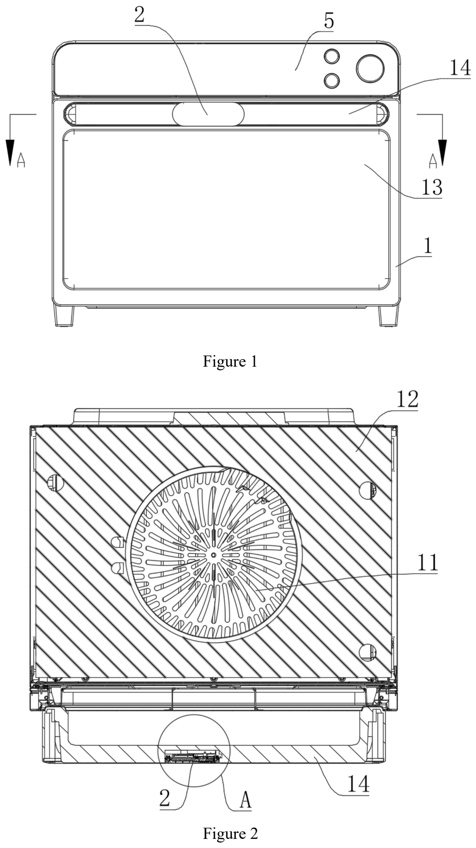

In an embodiment, referring to FIGS. 1 to 3, the cooking device comprises a cooking box 1, a storage box 2, and a temperature measuring probe 3. The cooking box 1 comprises a box body 12, a cooking cavity opening and closing member 13, and a handle 14 defined on the cooking cavity opening and closing member 13. The handle 14 is configured to operate the opening and closing of the cooking cavity opening and closing member 13. The box body 12 and the cooking cavity opening and closing member 13 enclose a cooking cavity 11 for cooking food. The temperature measuring probe 3 is detachably mounted in the storage box 2 to be removable for temperature measurement. The storage box 2 is detachably mounted on the handle 14, allowing the temperature measuring probe 3 to be promptly loaded into the storage box 2 for protection, while also facilitating cleaning of the storage box 2 and the temperature measuring probe 3.

Since the cooking device comprises the storage box 2 for storing the temperature measuring probe 3, the storage box 2 can be removed from the handle 14, the temperature measuring probe 3 can be removed from the storage box 2 to measure the temperature of the cooked food and accurately obtain the food temperature. After use, the temperature measuring probe 3 can be re-stored on the handle 14, improving the problem of inconvenient storage existing in current cooking devices when using the temperature measuring probe 3 to detect food temperature.

Regarding the cooking device, in an embodiment, the cooking device is an oven. In some other embodiments, the cooking device is an air fryer.

The cooking cavity opening and closing member 13 may be, for example, a box door, a drawer-type food carrier, a cover with an inner cavity (the inner cavity configured to form part of the space of the cooking cavity 11), or the like. In a specific embodiment, the cooking device may be an oven, and the cooking cavity opening and closing member 13 is a box door hinged on the box body 12. For another example, the cooking device may be an air fryer, and the cooking cavity opening and closing member 13 is a drawer-type food carrier that can be pulled out from the box body 12 and separated from the box body. For yet another example, the cooking device may be an air fryer, and the cooking cavity opening and closing member 13 is a cover hinged at the top of the box body, the cover having an inner cavity, and after the cover is closed, the inner cavity on the cover and the inner cavity in the box body together form the cooking cavity.

Regarding the temperature measuring probe 3, in an embodiment, the temperature measuring probe 3 is a wireless probe. The wireless probe may be powered by a rechargeable battery or by replaceable dry batteries. One end of the temperature measuring probe 3 is a temperature measuring end, and the other end is a handheld operation end, with the temperature measuring end typically being a tip.

It should be noted that, since the temperature measuring probe 3 of the present application can be removed from the storage box 2, the usage method is set according to user needs. For example, the temperature measuring probe 3 can be placed in the cooking box 1 and inserted into the cooked food. For another example, when the user needs to measure the air temperature in the cooking box 1, the temperature measuring probe 3 can also be placed in the cooking box 1 without inserting it into the food.

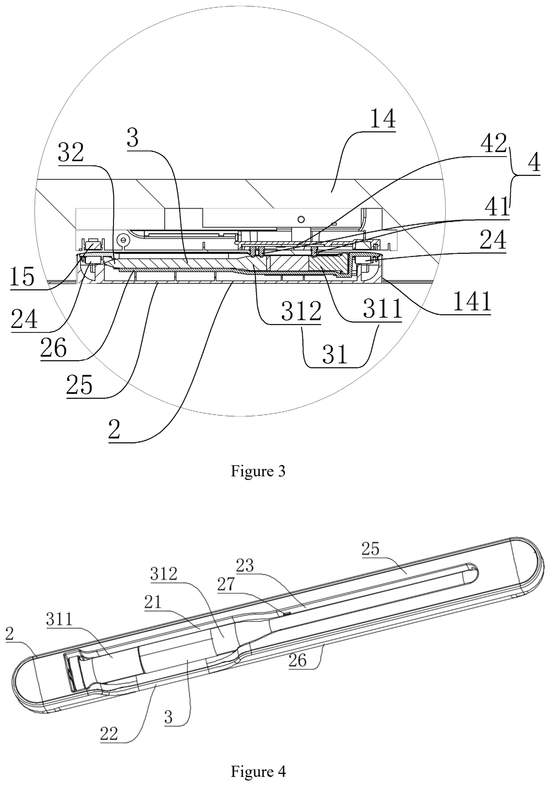

In an embodiment, referring to FIG. 3, the handle 14 has a mounting groove 141, the storage box 2 is detachably mounted in the mounting groove 141, and the outer surface of the storage box 2 transitions smoothly with the outer surface of the handle 14. In this way, the storage box 2 is less prone to being bumped, and the connection reliability between the storage box 2 and the handle 14 is better. Of course, in some other embodiments, the storage box 2 may also be mounted on the outer surface of the handle 14.

It should be noted that the "smooth transition between the outer surface of the storage box 2 and the outer surface of the handle 14" described in the present application includes both the case where the outer surface of the storage box 2 is flush with the outer surface of the handle 14 (referring to FIG. 3), and the case where at least part of the outer surface of the storage box 2 is lower than or protrudes from the outer surface of the handle 14, but at the boundary between the storage box 2 and the handle 14, the outer surface of the storage box 2 transitions smoothly with the outer surface of the handle 14 via a fillet.

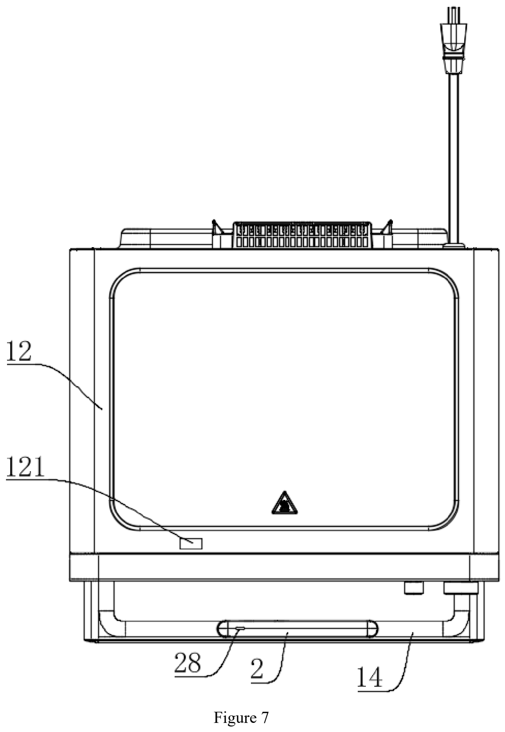

Further, regarding the orientation of the mounting groove 141, in an embodiment, referring to FIG. 3, the mounting groove 141 has a mounting opening for the storage box 2 to enter, and in a state where the cooking cavity opening and closing member 13 is closed, the mounting opening faces forward. In another embodiment, referring to FIG. 7, in a state where the cooking cavity opening and closing member 13 is closed, the handle 14 extends left and right, and the mounting opening of the mounting groove 141 faces upward or downward. In yet another embodiment, in a state where the cooking cavity opening and closing member 13 is closed, the handle 14 extends up and down, and the mounting opening of the mounting groove 141 faces left or right. Of course, in some other embodiments, the mounting groove 141 may also have two or more mounting openings simultaneously, and any mounting opening can be selected as needed to load the storage box 2.

In an embodiment, referring to FIG. 1, the mounting groove 141 is a through groove penetrating the handle. In an embodiment, referring to FIG. 1, the handle extends horizontally, and the mounting groove 141 penetrates the handle up and down. Of course, in an embodiment, referring to FIG. 7, the mounting groove 141 may also penetrate the handle horizontally. Of course, in some other embodiments, the mounting groove 141 may not be a through groove, and in this case, the mounting groove 141 has only one groove opening.

In another unillustrated embodiment, the storage box 2 may also be hidden, for example, the handle 14 comprises a groove cover, the groove cover openably covers the groove opening of the mounting groove 141, the groove cover is capable of covering the storage box 2 when closed and allowing the storage box 2 to be removed when open. Covering the storage box 2 with the groove cover can protect the temperature measuring probe 3. The groove cover can effectively shield the temperature measuring probe 3, prevent external substances from contaminating the temperature measuring probe 3, improve its service life, and also reduce the influence of the external environment on the temperature measuring probe 3, enhancing the safety of the temperature measuring probe 3. In cooking devices such as ovens and air fryers, the groove cover design can be optimized according to the appearance and function of the device, making it convenient to use without affecting the aesthetics of the device. Regarding the structure of the groove cover, in an embodiment, the groove cover is a flip cover hinged on the handle 14. In another embodiment, the groove cover is fixed on the handle 14 by a snap, and the groove cover can be separated from the handle 14 after opening.

In some other embodiments, in addition to using the mounting groove 141, an insertion hole may be provided on the handle 14, and the storage box 2 may be inserted into the insertion hole.

Regarding the detachable mounting method of the storage box 2 and the handle 14, in an embodiment, referring to FIG. 3, the storage box 2 is fixed on the handle 14 by magnetic attraction. Specifically, the storage box 2 comprises a storage box magnetic member 24, and the storage box magnetic member 24 can be attracted to the handle 14 to achieve fixation between the storage box 2 and the handle 14. When the storage box 2 needs to be removed, it can be forcibly removed from the handle 14. In an embodiment, referring to FIG. 3, the handle 14 also comprises a handle magnetic member 15, and the handle magnetic member 15 attracts the storage box magnetic member 24 to achieve magnetic fixation of the storage box 2. In an embodiment, referring to FIG. 3, both the handle magnetic member 15 and the storage box magnetic member 24 are magnets. In some other embodiments, only the handle magnetic member 15 may be provided in the handle 14 to attract the storage box 2.

In addition to the magnetic fixation method, in another unillustrated embodiment, the storage box 2 is fixed to the handle 14 by a snap. Of course, in another embodiment, the groove cover introduced in the above embodiments may also be configured to maintain the position of the storage box 2. To make the position of the storage box 2 more stable, the groove cover can apply a certain pressure to the storage box 2 after closing, which can also achieve detachable mounting of the storage box 2 and the handle 14.

Regarding the mounting method of the storage box magnetic member 24, in an embodiment, referring to FIGS. 3 to 6, the storage box 2 comprises a first box body 25 and a second box body 26, the second box body 26 is snap-fixed to the first box body 25, and the storage box magnetic member 24 is clamped between the first box body 25 and the second box body 26. In some other embodiments, the storage box magnetic member 24 may also be bonded inside the storage box 2.

Regarding the detachable mounting method of the temperature measuring probe 3 and the storage box 2, in an embodiment, referring to FIGS. 4 to 6, the storage box 2 has a storage box groove 23, and the temperature measuring probe 3 is mounted in the storage box groove 23. In an embodiment, referring to FIGS. 4 to 6, the storage box groove 23 has a snap 27, and the temperature measuring probe 3 is snapped into the storage box groove 23. In some other embodiments, in addition to the snapping method, the temperature measuring probe 3 may also be detachably fixed to the storage box 2 by magnetic attraction.

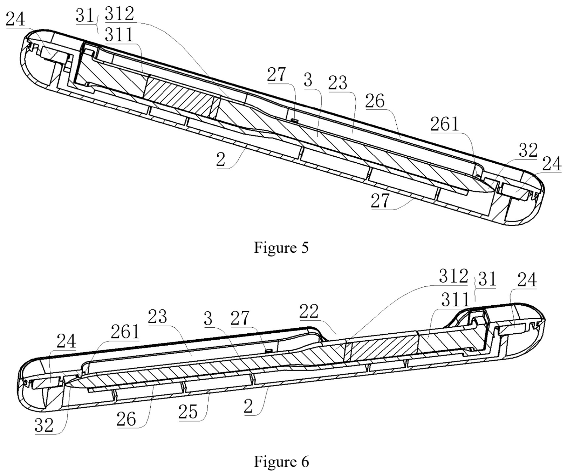

Specifically, in an embodiment, referring to FIGS. 4 to 6, the second box body 26 is snap-mounted in the first box body 25, and the storage box groove 23 is defined on the second box body 26. To stably mount the temperature measuring probe 3 in the storage box groove 23, in an embodiment, referring to FIGS. 5 and 6, the box wall of the second box body 26 has a through hole 261 for the needle 32 of the temperature measuring probe 3 to pass through, so that after the temperature measuring probe 3 is mounted in the storage box groove 23, it is more stable under the limiting action of the through hole 261 and less likely to escape from the storage box groove 23. When the temperature measuring probe 3 needs to be removed, an outward force is applied to the needle handle of the temperature measuring probe 3 to tilt the temperature measuring probe 3, and then the needle 32 of the temperature measuring probe 3 is withdrawn from the through hole 261.

In some other embodiments, a protective structure may also be added to the storage box groove 23 to improve the dust-proof, vibration-resistant, and other performances of the temperature measuring probe 3, further increasing the lifespan of the temperature measuring probe 3.

In an embodiment, referring to FIGS. 3 to 6, the temperature measuring probe 3 is a wireless probe, and the temperature measuring probe 3 comprises a probe charging member 31 and a probe battery (not shown in the figures). The cooking device comprises a charging module 4, the charging module 4 is defined in the handle 14, and the charging module 4 is configured to electrically connect with the probe charging member 31 after the temperature measuring probe 3 is loaded into the storage box 2 and the storage box 2 is mounted on the handle 14, to charge the temperature measuring probe 3. Disposing the charging module 4 in the handle 14 facilitates charging the temperature measuring probe 3 while storing it.

Regarding the charging method of the temperature measuring probe 3 on the handle 14, in an embodiment, referring to FIG. 3, the charging module 4 and the probe charging member 31 adopt a contact-type electrical connection. Specifically, the charging module 4 comprises a charging contact member 41, and the charging contact member 41 is configured to make conductive contact with the probe charging member 31 to achieve electrical connection between the charging module 4 and the probe charging member 31.

Further, referring to FIGS. 3 and 4, the storage box 2 has a box opening 21 for inserting and removing the temperature measuring probe 3. After the storage box 2 is mounted on the handle 14, the box opening 21 faces the handle 14, and the charging contact member 41 extends into the storage box 2 through the box opening 21 to make conductive electrical contact with the probe charging member 31. In this way, after the storage box 2 is mounted on the handle 14, the box opening 21 is blocked by the handle 14, making it less likely for dust and other debris to enter. Additionally, the charging contact member 41 extending into the storage box 2 through the box opening 21 fully utilizes the structure of the storage box 2, so that the storage box 2 does not need to have a separate insertion hole for the charging contact member 41 to extend into. Of course, in some other embodiments, a separate contact member insertion hole for the charging contact member 41 to extend into the storage box 2 may also be provided.

In some other unillustrated embodiments, the storage box 2 comprises a box body and a box cover, the box opening 21 is on the box body, the temperature measuring probe 3 is inserted and removed from the box body through the box opening 21, and the box cover covers the box opening 21. In this case, the box opening 21 may face away from the cooking box 1, and the contact member insertion hole for the charging contact member 41 to extend into the storage box 2 is on the box body. According to actual needs, only the box cover may be opened to remove the temperature measuring probe 3, leaving the box body on the cooking box 1. Of course, when the box body needs to be removed, the box body can also be removed from the cooking box 1.

To facilitate removing the temperature measuring probe 3 from the storage box 2, in an embodiment, referring to FIGS. 4 and 6, the box side wall of the storage box 2 has a probe removal notch 22 communicating with the box opening 21. Specifically, the probe removal notch 22 is on the groove side wall of the storage box groove 23. In some other embodiments, a specially shaped storage box groove 23 may also be provided in the storage box 2, and after the temperature measuring probe 3 is loaded into the storage box groove 23 of the storage box 2, operation spaces for removing the temperature measuring probe 3 are left on both sides of the temperature measuring probe 3.

The charging contact member 41 and the probe charging member 31 may adopt various forms of conductive contact:
For example, in an embodiment, referring to FIGS. 3 to 6, to facilitate conductive contact between the probe charging member 31 and the charging contact member 41, the surface of the probe charging member 31 in contact with the charging contact member 41 is an annular surface. In an embodiment, referring to FIG. 3, the charging contact member 41 is a conductive contact finger. Specifically, in an unillustrated embodiment, the conductive contact finger may be a spring contact finger, which can achieve pressing against the probe charging member 31 to realize reliable electrical connection between the charging contact member 41 and the probe charging member 31. In an unillustrated embodiment, the charging contact member 41 is a conductive ring.

For another example, in an unillustrated embodiment, the probe charging member 31 may also be conductively plugged into the charging contact member 41, with one of the probe charging member 31 and the charging contact member 41 having an insertion hole and the other having a plug for inserting into the insertion hole. After the plug is inserted into the insertion hole, conductive connection between the probe charging member 31 and the charging contact member 41 is achieved.

Regarding the specific structure of the probe charging member 31, in an embodiment, referring to FIGS. 3 and 6, the probe charging member 31 comprises a probe positive electrode 311 and a probe negative electrode 312. To facilitate conductive contact between the probe charging member 31 and the charging contact member 41, the probe positive electrode 311 and the probe negative electrode 312 are spaced along the length direction of the temperature measuring probe 3. The probe positive electrode 311 and the probe negative electrode 312 respectively form a positive electrode segment and a negative electrode segment in the length direction of the temperature measuring probe 3. The outer peripheral surface of the probe positive electrode 311 is exposed and forms the outer peripheral cylindrical surface of the positive electrode segment, and the outer peripheral surface of the probe negative electrode 312 is exposed and forms the outer peripheral cylindrical surface of the negative electrode segment. In this way, regardless of which side the temperature measuring probe 3 is snapped into the storage box groove 23, it can conveniently make conductive contact with the charging contact member 41.

In an embodiment, referring to FIG. 3, the charging module 4 comprises a circuit board 42 mounted on the cooking box 1, and the charging contact member 41 is connected to the circuit board 42. In an embodiment, referring to FIG. 3, the number of charging contact members 41 is three, with one charging contact member 41 in conductive contact with the probe positive electrode 311, and the other two charging contact members 41 in contact with the probe negative electrode 312.

In addition to the contact-type charging method, the charging module 4 and the probe charging member 31 may also adopt wireless electrical connection. In an unillustrated embodiment, the charging module 4 is a wireless charging module 4, and the probe charging member 31 is used for wireless electrical connection with the wireless charging module 4 to wirelessly charge the temperature measuring probe 3. Through the wireless charging method, the user only needs to place the temperature measuring probe 3 in the charging area of the handle without plugging or unplugging any charging contacts, greatly improving the convenience of use. This design can effectively reduce wear on the plug-in interfaces and increase the service life of the temperature measuring probe 3. In an unillustrated embodiment, the probe charging member 31 is a probe charging coil, and the probe charging coil is connected to the probe battery. The charging module 4 comprises a handle charging coil, and through electromagnetic induction between the handle charging coil and the probe charging coil, charging of the probe battery is achieved.

In addition to disposing the charging module 4 on the handle 14, in an unillustrated embodiment, the charging module 4 is defined in the storage box 2, and the charging module 4 is configured to conductively connect with the probe charging member 31 so that the charging module 4 can charge the probe battery. The storage box 2 has a charging interface 28, and the charging interface 28 is electrically connected to the charging module 4. The box body 12 has a power supply interface 121 for conducting with the power supply system, and the charging interface 28 is configured to conduct with the power supply interface 121 via an external charging cable.

Of course, in some other embodiments, the cooking device may also comprise a handle power supply module defined in the handle 14, and the handle power supply module is connected to the power supply system in the box body 12 via wires. The handle power supply module makes conductive contact with the charging module 4 when the storage box 2 is mounted to the handle 14.

It should be noted that when conductive elements need to be defined on the handle 14, wires are required to connect the conductive elements on the handle 14 to the power supply system in the box body 12. For the case where the box body 12 is movably connected to the cooking cavity opening and closing member 13, such as the cooking cavity opening and closing member 13 being hinged on the box body 12, the wires can pass through the handle 14, the cooking cavity opening and closing member 13, and the hinge between the cooking cavity opening and closing member 13 and the box body 12 to lead to the power supply system of the box body 12; of course, the wires can also extend from the handle 14 and directly connect to the power supply system of the box body 12. For the case where the box body 12 and the cooking cavity opening and closing member 13 are separable, a conductive structure needs to be provided between the box body 12 and the cooking cavity opening and closing member 13, such as a plug on one of the box body 12 and the cooking cavity opening and closing member 13, and a socket on the other. After the cooking cavity opening and closing member 13 is closed, the plug conducts with the socket, and after the cooking cavity opening and closing member 13 is opened, the plug separates from the socket. Therefore, in this case, the temperature measuring probe 3 can only be charged when the cooking cavity opening and closing member 13 is closed.

In some other embodiments, the temperature measuring probe 3 may also be provided with a charging port, and a separately configured charger is configured to charge the temperature measuring probe 3, or a charging cable is configured to connect the temperature measuring probe 3 to the power supply system of the box body 12 to charge the temperature measuring probe 3.

In an embodiment, the cooking box 1 comprises a control module for controlling the temperature in the cooking box 1, and the control module is wirelessly communicatively connected to the temperature measuring probe 3 to receive measurement data from the temperature measuring probe 3. The control module can control the cooking temperature in the cooking box 1 to be in a target range based on the measurement data from the temperature measuring probe 3. When the measured temperature of the temperature measuring probe 3 is higher than the target temperature, the control module can control the cooking box 1 to cool down, and when the measured temperature of the temperature measuring probe 3 is lower than the target temperature, the control module can control the cooking box 1 to heat up. Since the temperature measuring probe 3 is configured to insert into the cooked food to measure the precise temperature inside the food, precise temperature control can be achieved through the temperature measuring probe 3, especially for foods like beef. Due to the precise temperature control of the temperature measuring probe 3, the cooking effect is better compared to traditional ovens.

Specifically, in an embodiment, the cooking box 1 comprises a heating element, the control module is connected to the heating circuit of the heating element, and the control module can control the heating power and the start/stop of the heating element, thereby controlling the cooking temperature of the cooking box 1.

In an embodiment, the control module comprises a signal receiving module wirelessly communicatively connected to the temperature measuring probe 3, and the signal receiving module is configured to receive temperature information measured by the temperature measuring probe 3. In an embodiment, referring to FIG. 1, the control module comprises a control panel 5, through which the target temperature of the cooking box 1 can be set. In an embodiment, when the temperature measuring probe 3 is charging, the control panel 5 can display the charging level of the temperature measuring probe 3.

In addition to the method of loading the temperature measuring probe 3 into the storage box 2 introduced in the above embodiments, in an unillustrated embodiment, the temperature measuring probe 3 may also be directly mounted on the handle 14. In this embodiment, the structures of the box body 12 and the cooking cavity opening and closing member 13 of the cooking box 1 may be the same as any of the structures introduced above, which will not be repeated, and the differences from the structures in the above embodiments will be emphasized below.

The handle 14 comprises a storage connection structure, and the temperature measuring probe 3 is detachably connected to the storage connection structure so that the temperature measuring probe 3 can be removed for temperature measurement. In a state where the temperature measuring probe 3 is stored in the storage connection structure, the temperature measuring end of the temperature measuring probe 3 is located outside the cooking cavity 11. In this way, after using the temperature measuring probe 3 to complete temperature measurement, the temperature measuring probe 3 can be directly stored on the handle 14. When using the temperature measuring probe for temperature measurement, the temperature measuring end of the temperature measuring probe 3 is inserted into the food or placed at the position to be measured.

In an unillustrated embodiment, the storage connection structure has a storage groove, and the temperature measuring probe 3 is detachably mounted in the storage groove. The storage groove facilitates storage of the temperature measuring probe 3, and after storing the temperature measuring probe 3 in the storage groove, it is less likely to be touched, and the connection reliability between the temperature measuring probe 3 and the handle 14 is better.

There are various feasible ways for the storage connection structure, such as the storage connection structure being a magnetic attraction member, with the temperature measuring probe 3 attracted and fixed to the magnetic attraction member; for another example, the storage connection structure being a snap, with the temperature measuring probe 3 snap-fixed on the handle 14.

In an embodiment, using a structure similar to that of the storage box 2 embodiment, when the temperature measuring probe 3 is directly mounted on the handle 14, it may also be a wireless probe, the cooking box 1 comprises a control module for controlling the temperature in the cooking box 1, and the control module is wirelessly communicatively connected to the wireless probe to receive measurement data from the wireless probe. In an embodiment, the temperature measuring probe 3 can be charged through a charging module 4 defined in the handle 14, or powered by replaceable dry batteries. In some other embodiments, the temperature measuring probe 3 may also be provided with a charging port, and when charging is needed, an external charging cable is configured to connect the power supply system in the box body 12 to the temperature measuring probe 3 to charge the temperature measuring probe 3.

It should be noted that the wireless probe described in the present application refers to a probe that can be used independently and can operate without connecting power supply lines. In some embodiments, in addition to not requiring connection to components for powering it, the wireless probe is also equipped with wireless communication components, and in this case, the wireless probe has the conditions for wireless communication with other devices, which may be the control module in the cooking box or the user's mobile terminal.

The above uses specific examples to illustrate the present application, which are only configured to help understand the present application and not to limit it. For those skilled in the technical field to which the present application belongs, based on the ideas of the present application, several simple deductions, modifications, or substitutions can also be made.

## Claims

1. A cooking device, comprising:
a cooking box, the cooking box comprising a box body, a cooking cavity opening and closing member, and a handle defined on the cooking cavity opening and closing member, the box body and the cooking cavity opening and closing member enclosing a cooking cavity for cooking food; the handle being configured to operate opening and closing of the cooking cavity opening and closing member;
**characterized in that** a storage box, the storage box being detachably mounted on the handle; and
a temperature measuring probe, the temperature measuring probe being detachably mounted in the storage box to be removable for temperature measurement.

2. The cooking device according to claim 1, **characterized in that** the handle has a mounting groove, the storage box is detachably mounted in the mounting groove, and an outer surface of the storage box transitions smoothly with an outer surface of the handle.

3. The cooking device according to claim 1, **characterized in that** the handle has a mounting groove, the storage box is detachably mounted in the mounting groove, the handle comprises a groove cover, the groove cover is openably covering a groove opening of the mounting groove, the groove cover being capable of covering the storage box when closed and allowing the storage box to be removed when open.

4. The cooking device according to any one of claims 1-3, **characterized in that** the temperature measuring probe is a wireless probe, the cooking device comprises a charging module, the charging module is defined in the handle, the temperature measuring probe comprises a probe charging member and a probe battery; the charging module is configured to electrically connect with the probe charging member after the temperature measuring probe is loaded into the storage box and the storage box is mounted on the handle, to charge the temperature measuring probe.

5. The cooking device according to claim 4, **characterized in that** the charging module comprises a charging contact member; the charging contact member is configured to make conductive contact with the probe charging member to achieve electrical connection between the charging module and the probe charging member.

6. The cooking device according to claim 5, **characterized in that** the storage box has a box opening for inserting and removing the temperature measuring probe, after the storage box is mounted on the handle, the box opening faces the handle, and the charging contact member extends into the storage box through the box opening to make conductive electrical contact with the probe charging member.

7. The cooking device according to any one of claims 1-3, **characterized in that** the cooking device comprises a charging module, the charging module is defined in the storage box, the temperature measuring probe comprises a probe charging member and a probe battery electrically connected to the probe charging member, the charging module is configured to conductively connect with the probe charging member so that the charging module can charge the probe battery; the storage box has a charging interface, the charging interface is electrically connected to the charging module, the box body has a power supply interface for conducting with a power source, and the charging interface is configured to conduct with the power supply interface via an external charging cable.

8. A cooking device, comprising:
a cooking box, the cooking box comprising a box body, a cooking cavity opening and closing member, and a handle defined on the cooking cavity opening and closing member, the box body and the cooking cavity opening and closing member enclosing a cooking cavity for cooking food; the handle being configured to operate the opening and closing of the cooking cavity opening and closing member; and
a temperature measuring probe, **characterized in that** the handle comprising a storage connection structure, the temperature measuring probe being detachably connected to the storage connection structure so that the temperature measuring probe can be removed for temperature measurement; in a state where the temperature measuring probe is stored in the storage connection structure, a temperature measuring end of the temperature measuring probe is located outside the cooking cavity.

9. The cooking device according to claim 8, **characterized in that** the storage connection structure has a storage groove, and the temperature measuring probe is detachably mounted in the storage groove.

10. The cooking device according to claim 1 or 8, **characterized in that** the temperature measuring probe is a wireless probe, the cooking box comprises a control module for controlling the temperature in the cooking box, and the control module is wirelessly communicatively connected to the temperature measuring probe to receive measurement data from the temperature measuring probe.
